# EUROPEAN PATENT APPLICATION

(11) **EP 3 549 676 A1**
(43) Date of publication of application: **09.10.2019**
(21) Application number: 18165785.9
(22) Date of filing: 04.04.2018
(51) Int. Cl.: B03D 1/14, B03D 1/24, C08B 37/00, C08J 3/14

(54) **METHOD AND SYSTEM FOR SEPARATING A PRECIPITATE FROM A LIQUID**

(71) Applicant: Clariant International Ltd, 4132 Muttenz (CH)
(72) Inventor: MALZER, Wilfried, 65812 Bad Soden (DE); EICHENSEER, Matthias, 85622 Feldkirchen (DE); SIEKER, Tim, 82152 Krailling (DE); VERHUELSDONK, Marcus, 82110 Germering (DE); GRASER, Konstanze, 81925 München (DE); ZAVREL, Michael, 82140 Olching (DE)
(74) Representative: Graser, Konstanze

(57) **Abstract**

Method for separating a precipitate from a liquid, including:
-inducing transport of at least part of the precipitate to an upper surface of the liquid; and
-removing precipitate from the upper surface of the liquid.

The invention further provides a system for separating a precipitate from a liquid, wherein the system includes:
-a container (1) for receiving a liquid wherein precipitate is and/or has been formed;
-a precipitate transport inducing means (3) for inducing precipitate transport towards an upper surface of liquid, held in the container (1) during operation; and
-a precipitate removing means (5) for removing precipitate from a precipitate removal level within the container (1), the precipitate removal level being associated with an upper surface of liquid, held in the container (1) during operation.

The invention also provides a process for the recovery of water soluble biopolymers from an aqueous solution.

## Description

The invention concerns a method for separating a precipitate from a liquid, as well as a system, and a process for the recovery of water soluble biopolymers from an aqueous solution.

Separating a precipitate from a liquid can be achieved in various ways. For example, it is known to use centrifugation for achieving the separation. Precipitates that are to be separated can include various substances or compounds, for example precipitated biopolymers, as will be clear to the skilled person. It therefore follows that the precipitate separation process can be part of a biopolymer recovery process.

A disadvantage of known methods is that they are usually involve batch type processes that are not well suited for efficient large scale processing.

Besides, in known processes for the recovery of water soluble biopolymers from aqueous solutions, biopolymer precipitation is commonly achieved by mixing with solvent, usually an explosive organic solvent (e.g. methanol, isopropanol, ethanol or acetone). Under such conditions, it is desired that the solvent can be recovered properly, wherein explosion risk is avoided. Also, it has been found that biopolymer precipitate is relatively hard to remove from liquid/solvent mixtures by centrifugation, in case the precipitate has substantially the same density as the liquid containing that precipitate. In that case, stirred batch reactors can be applied to achieve precipitation, however, operation of a stirring mechanism may increase explosion risks whereas removal of a resulting precipitate from a reactor vessel is cumbersome. This is even more problematic in case the biopolymer includes relatively long fibers, which coil up in the stirrer equipment, wherein the formed coil of fibers is very hard to remove from the apparatus.

The present invention aims to avoid or alleviate the above-mentioned problems. In particular, according to an aspect, the invention aims to provide an improved method for separating precipitate from a liquid. Also, the invention aims to provide an improved process for recovery of biopolymers. More in particular, the invention aims to provide such a method/process that can be carried out safely, efficiently, in an economical manner.

According to an aspect of the invention, this is achieved by a method for separating a precipitate from a liquid, the method including:
- inducing transport of at least part of the precipitate to an upper surface of the liquid; and
- removing precipitate from the upper surface of the liquid.

In this way, precipitate can be removed efficiently and safely from the liquid, via the upper surface of the liquid. Herein, for example, the precipitate can cover the upper surface, partly or substantially entirely, e.g. to be taken up by suitable precipitate removal means.

According to a further embodiment, wherein the liquid contains water. Additionally, or alternatively, the liquid can contain a (liquid) organic solvent, for example a solvent for inducing precipitate formation in the liquid. In the latter case, for example, advantageously, the precipitate is a biopolymer. It has been found that the invention is particularly well suited to achieve solvent induced biopolymer precipitation and separation, wherein application of mechanical stirred batch reactors can be avoided, leading to high throughput in a relatively safe manner (with relatively low risk of explosion).

For example, the innovative new precipitate separation method can be applied to precipitates that are usually rather difficult to separate from a precipitate containing liquid. This is the case, e.g., when the precipitate has a density (kg/m³) that is substantially the same as a density (kg/m³) of the liquid, such that the precipitate does not substantially sink or float by itself in the liquid. Biopolymer precipitates can be examples of precipitates that have this property.

According to a preferred embodiment, the method includes feeding a fluid into the liquid, in particular for generating an upwardly directed precipitate transport flow in the liquid, the fluid preferably forming at least one stream of fluid bubbles in the liquid. For example, the fluid can have a lower density than a density of the liquid, and more particularly, the fluid can be a gas or gas mixture, for example an inert gas. An upwardly directed fluid (e.g. gas bubbles that rise in the liquid, as a result of buoyancy) can act on or interact with the precipitate, transferring kinetic energy to the precipitate causing the precipitate to rise as well in the liquid (towards the upper surface). The fluid (in particular gas or gas mixture) can leave the liquid via the upper surface of the liquid, leaving risen precipitate behind to be removed from the liquid (e.g. by suitable precipitate removal means).

It is preferred that a relatively large area or volume of the liquid can be reached by the additional fluid that induces precipitate lifting flow. To that aim, for example, the fluid can be injected into the liquid via a number of fluid injection openings, for example pores and/or injection nozzles, in particular at a level below the upper surface of the liquid.

Further, according to an embodiment, there can be provided at least a liquid agitation step of injecting at least one fluid jet into the liquid for agitating the liquid, in particular for turbulently mixing the contents of the liquid. The agitation step can assist in a precipitation process in the liquid, e.g. to vigorously mix a compound that is to be precipitated with a precipitation inducer. As an example, the method can include providing a liquid solution of a compound, e.g. a biopolymer, to be precipitated, and mixing the liquid solution with a precipitation inducer to induce precipitation of the compound into the precipitate. In that case, the resulting mixture can be the liquid from which precipitate is to be separated.

In a further embodiment, the method can including dehumidification (e.g. in an additional dehumidification step) of precipitate that is separated from the liquid surface, in particular to remove excess liquid that may have been removed ('escaped') together with the precipitate.

Further, the present invention provides a system for separating a precipitate from a liquid, for example for carrying out the method described above. Advantageously, the system includes:
- a container for receiving a liquid wherein precipitate is and/or has been formed;
- a precipitate transport inducing means for inducing precipitate transport towards an upper surface of liquid, held in the container during operation; and
- a precipitate removing means for removing precipitate from a precipitate removal level within the container, the precipitate removal level being associated with an upper surface of liquid, held in the container during operation.

In this way, the above-mentioned advantages can be achieved. In particular, the system can separate precipitate from liquid efficiently and safely, and for example in an in-line process.

Further, there is provided a process for the recovery of water soluble biopolymers from an aqueous solution, the process including a method according to the invention and/or use of a system according to the invention for separating at least part of the biopolymers from the solution, so that the recovery of water soluble biopolymers can be achieved with the above-mentioned advantages.

Further to the above, within the present invention the term "biopolymer" is to be understood as any polymer produced by living organisms. The inventive process and system are particularly suitable for biopolymers which show a temperature-independent viscosity within the range from 20 to 100°C or within the range of from 20 to 80°C. The inventive process is particularly suitable for biopolymers containing monomeric units which are covalently bonded such as polymeric carbohydrate structures, rubber, suberin, melanin and lignin. Within an exemplary embodiment, the at least one biopolymer has a molecular weight of at least 0.8 MegaDalton such as scleroglucan, pullulan or beta-glucan. Within another exemplary embodiment, the at least one biopolymer has a molecular weight distribution with a maximum of from 0.5 to 5.0 Million Dalton (MegaDalton) or from 0.75 to 3.5 Million Dalton (MegaDalton) or from 1.0 to 2.0 Million Dalton (MegaDalton). Within an exemplary embodiment the biopolymer has a shear thinning behavior described by a constant *b* in which *b* is the gradient between two pairs of values *x1*/*y1* and *x2*/*y2* where *x* is the shear rate [s⁻¹] in the range of 0.1-100 s⁻¹ and *y* is the dynamic viscosity [mPas] at the given shear rate and at a temperature of the biopolymer between 20°C and 80°C and a concentration between 0.05 and 0.5 wt.-%. The constant *b* can described by the formula b= - ((lg(y1/y2)/(lg(x1/x2)). Within a suitable but exemplary embodiment b is selected from the range of from 0.65 to 1.05. Within another exemplary embodiment *b* is selected from the range of from 0.7 to 1.0. Within another exemplary embodiment *b* is selected from the range of from 0.75 to 0.9. Within the present invention the term "beta-glucan" is to be understood as referring to any β-D-glucose polysaccharide characterized by the formation of a linear backbone with 1-3 β-glycosidic bonds. Within special embodiments of the present invention, the beta-glucans have a molecular weight distribution with a maximum of from 0.5 to 5.0 Million Dalton (MegaDalton) or from 0.75 to 3.5 Million Dalton (MegaDalton) or from 1.0 to 2.0 Million Dalton (MegaDalton).

Within the present invention the term "beta-glucan" is to be understood as referring to any -D-glucose polysaccharide characterized by the formation of a linear backbone with 1-3 -glycosidic bonds. Within special embodiments of the present invention, the beta-glucans have a molecular weight distribution with a maximum of from 0.8 to 1.6 Million Dalton (MegaDalton) or from 1.0 to 1.4 MegaDalton.

Further advantageous embodiments of the invention are described in the dependent claims. Various aspects of the invention will now be explained with reference to the non-limiting examples depicted in the drawings. Therein shows:
Figure 1 schematically a process for biopolymer production;
Figure 2 schematically a first embodiment of a system for separating a precipitate from a liquid;
Figure 3 schematically a second embodiment of a system for separating a precipitate from a liquid; and
Figure 4 a cross-section over line IV-IV of Fig. 3.

In the present application, corresponding or similar features are denoted by corresponding or similar reference signs.

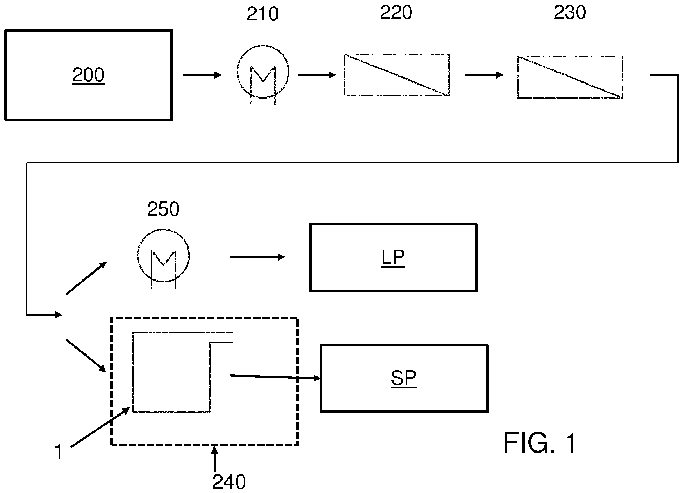

Precipitates can be formed in various ways, as will be appreciated by the skilled person. One example is biopolymer precipitation, as part of biopolymer production. Figure 1 schematically depicts an exemplary process for biopolymer precipitation. It can include e.g. the following steps:
- a fermentation step 200 for providing a fermentation broth;
- a first ultra-high temperature (UHT) treatment step 210;
- one or more filter stages, for example including a filter step 220, for example utilizing a filter press, and an ultrafiltration step 230;
- a precipitation step 240, to provide solid product SP; and
- a second ultra-high temperature (UHT) treatment step 250, to provide liquid product LP.

Generally, the precipitation step 240 is carried out to recover water soluble biopolymers from an aqueous solution, the solution e.g. being the product that is provided by the one or more filter stages 220, 230. The aqueous solution that is fed to the precipitation step 230 usually has a relatively high viscosity. The precipitation of the biopolymers during the precipitation step 240 can produce precipitate consisting of fibers of biopolymers (i.e. a fibrous precipitate). It is known to achieve such biopolymer precipitation by mixing an organic solvent (e.g. methanol, ethanol, isopropanol, or acetone) into the aqueous solution.

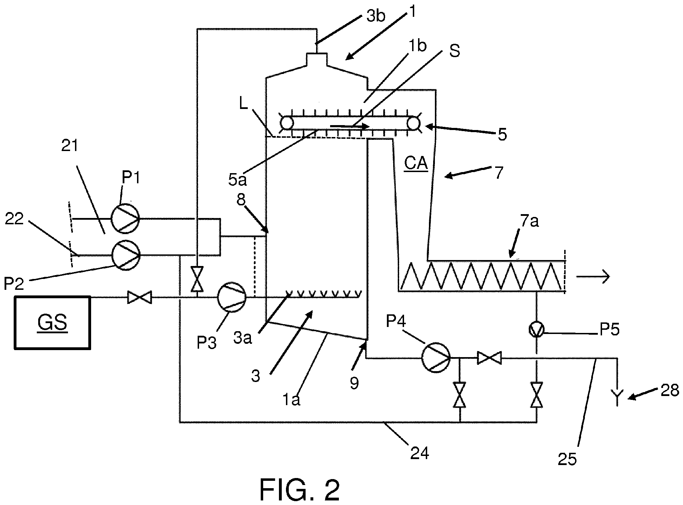

Figure 2 shows a system for separating the precipitate from the liquid, that can be used e.g. in the process shown in Figure 1. The system includes a container 1 for receiving the liquid, wherein precipitate is to be formed. A first feed line 21 is provided for feeding the aqueous solution into the container, via an entry port 8 (e.g. a liquid injection nozzle), in particular to fill the container with that solution. Also, a second feed line 22 is available, for feeding a solvent (suitable to induce the precipitation of the biopolymer) to the container. In the example, the first feed line 21 and second feed line 22 join one another upstream of an entry port to the container 1, but they can also be separately connected to the container 1.Also, in this example, each of the two feed lines is provided with a respective pumping unit P1, resp. P2 for controlling respective feed line flows.

Further, the system includes a precipitate transport inducing means 3 for inducing precipitate transport towards an upper surface of liquid, held in the container 1 during operation.

The present precipitate transport inducing means 3 include an inlet 3a, configured for feeding precipitate transport fluid into the container 1 at or near a bottom of the container 1a, in particular a fluid having a lower density than a density of liquid present in the container during operation. In the present example, a gas is used as precipitate transport fluid. To that aim, the system includes a gas source GS, containing precipitate transport gas, and a gas feed line 23 to feed the gas to the fluid inlet 3a. Optionally, the gas feed line 23 is provided with a third pumping unit P3, for pumping the gas to the downstream inlet 3a .Preferably, the gas is an inert gas (e.g. nitrogen, argon, helium, or carbon-dioxide, or a mixture thereof).

The gas inlet can be configured in various means. In this example the gas inlet 3a includes a plurality of gas injection openings, for injecting the gas at a plurality of spaced-apart locations into the content of the container 1 (i.e. into liquid present in the container 1 during operation). The gas inlet 3a of the example is located at a level above a bottom level of the container. The respective container bottom 1a can e.g. extend at a certain angle (> 0 degrees) with respect to a virtual horizontal plane, wherein a low or lowest position of the container bottom 1a can be provided by a liquid drain/discharge port 9. The liquid discharge port 9 can be in fluid communication with a respective, fourth pumping unit P4 for feeding liquid to the pump, in particular for circulating liquid back into the container via a feedback line 24 (a downstream end of which is in fluid communication with the liquid entry port 8. In a further embodiment, the fourth pumping unit P4 and respective downstream liquid injection port 8 can operate for injecting liquid into the container 1, in particular for agitating the (liquid) contents of the container 1 during operation. In addition, there is provided a separate discharge line 25, downstream of the fourth pumping unit, for feeding the liquid to a liquid disposal means 28 (instead of circulating the liquid).

Also, the system can include a fluid outlet 3b for removing precipitate transport fluid, i.e. the gas, from the container 1. The fluid outlet is preferably located above or near the precipitate removal level L, as in the present example.

A precipitate removing means 5 is provided, for removing precipitate from a precipitate removal level L within the container 1. The precipitate removal level being associated with an upper surface of liquid, held in the container 1 during operation.

Figure 2 schematically shows a scraper type precipitate removing means 5, which has a driven, endless scraping member having a plurality of laterally/downwardly protruding precipitate scraping or take-up elements (e.g. relatively rigid scraping fins of fingers). The scraping member can include e.g. one or more endless belts, chains, or different endless transport means as will be clear to the skilled person. During operation, a lower part 5a of the endless scraping member can be driven in a scraping direction S (a substantially horizontal direction, in this non-limiting example), wherein respective scraping elements can mechanically contact precipitate at the removal level L, to force/transport the precipitate towards a collecting area CA. The lower part 5a of the scraping member may extend e.g. through an opening or precipitate discharge gap 1b of a side wall of the container 1, from the precipitate removal level L into the separate collecting area CA of the precipitate collector 7 (as in Fig. 2), wherein scraped/collected precipitate can be dropped into the collecting area CA for further processing.

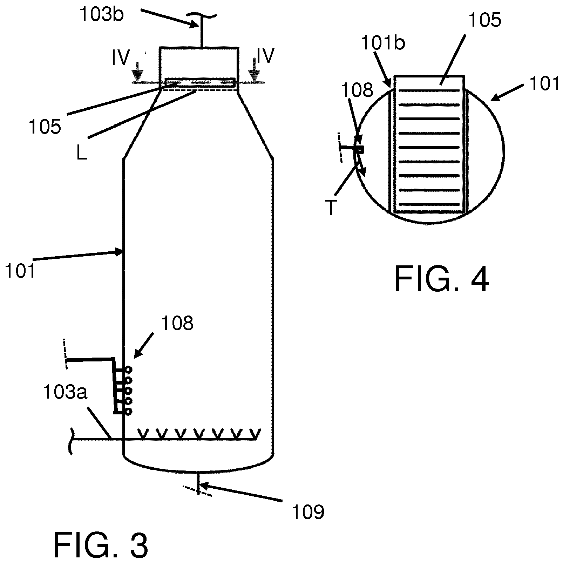

Figures 3, 4 show an alternative example, of a container 101, include a drive4n conveyer 105, arranged for contacting precipitate at the upper surface of the liquid, during operation, to move precipitate away from the liquid to a precipitate collector 7. The driven conveyer 105 can e.g. have a scraper type configuration (as in the Fig. 2 embodiment). This alternative example differs from the embodiment of Figure 2 in that the container 101 has a generally circular container wall (see Fig. 4, a center line of the container 101 being a substantially vertical line in this example), wherein a number of injection ports 108 is provided at or near the container wall, configured for injecting liquid in a substantially tangential direction T into the container 101. Also, the second embodiment includes a liquid discharge port 109, located at a container bottom, gas injection nozzles 103a, a gas discharge port 103b at a top of the container 101, as well as an opening 101b for the precipitate conveyor/scraper 105.

Referring to Fig 2, in the depicted system, the precipitate collector 7 is configured to receive precipitate from the scraping means 5. The collector 7 can include a dewatering unit 7a (e.g. a screw press) for further removing liquid from collected precipitate, and for discharging the solid end-product (to be processed further and/or packed or the-like). The dewatering unit 7a can include a liquid discharge port, optionally coupled to a fifth pumping nit P5, to discharge and optionally circulate the liquid.

Besides, the system can include a number of flow controllers (e.g. control valves), for controlling liquid and gas flows through the respective lines/conduits. Further, a controller unit (not shown) can be provided, e.g. a computer, for automatically controlling the process, i.e. respective fluid flows, pumping means, valves, discharge means et cetera, as will be appreciated by the skilled person.

During operation of the system depicted in Figure 2 (or alternatively Figure 3), the container 1 (or 101) can be used for precipitate formation and subsequent precipitate separation. The process can involve feeding to the container 1 a liquid solution of a compound to be precipitated, e.g. a biopolymer, via the first supply line 21 (optionally utilizing the first pumping unit P1). In the following, as an example, biopolymer precipitation via a solvent precipitation inducer will be described in more detail. A non-limiting example of the biopolymers to be precipitated includes polysaccharides (e.g. exopolysaccharides, EPSs). The inventive process is particularly suitable for biopolymers containing monomeric units which are covalently bonded such as polymeric carbohydrate structures, rubber, suberin, melanin and lignin.

The present method is particularly advantageous for biopolymer processing (e.g. solid biopolymer recovery), wherein resulting biopolymer precipitate has a density (kg/m³) that is substantially the same as a density (kg/m³) of the respective liquid (e.g. water). The biopolymer precipitate can e.g. include relatively long solid (linear) fibers, as will be clear to the skilled person.

An aqueous biopolymer solution (in particular a solution of biopolymer in water) is mixed with a suitable biopolymer precipitation inducer (e.g. an organic solvent, as is mentioned before), that is fed via the second feed line 22 (optionally using the respective second pumping unit 2) into the container 1 as well. The feeding of the aqueous biopolymer solution and the precipitation inducer (solvent, in this case) can be achieved in various ways, depending e.g. on the respective flow rates and precipitation rates. In particular, initially, the container 1 is filled with the solvent first, after which the aqueous biopolymer solution is fed to the solvent in the container 1 so that biopolymer precipitation is initiated.

It follows that the contents of the container result in a mixture of solvent, water and biopolymer, which mixture is used as the liquid from which precipitate is to be separated.

Transport of at least part of the precipitate to an upper surface (i.e. the precipitate removal level L) of the liquid mixture is achieved by the third pumping unit P3 pumping gas (from the gas source GS) into the container 1, via the gas inlets 3a (e.g. pores and/or injection nozzles, in particular at a level below the upper surface L of the liquid). The gas, fed into the container 1, can generate an upwardly directed precipitate transport flow in the liquid, preferably by forming a plurality of gas bubble streams in the liquid (e.g. gas bubbles, initially having a relatively small bubble diameter, e.g. in the range of about 1-5 mm; after injection such small gas bubbles may retain a small diameter or they may coalesce to bubbles of larger diameters). Since, the gas has a lower density than the liquid contents of the container 1, the gas bubbles rise, and can transfer kinetic energy to formed precipitate, causing the precipitate to rise as well.

Gas can escape the liquid surface level L, to be discharged from the container via the gas discharge port 3b (e.g. for recirculation to the gas inlets 3a).

Also, as a result, precipitate build-ups at the liquid surface level L, and can be removed from the container 1 by the precipitate removing means 5, to be collected and processed further via the precipitate collector 7. For example, removed precipitate can be further dried by the dewatering unit 7a, wherein the fifth pumping unit P5 can be used for circulating liquid emanating from the dewatering unit 7a back into the container 1. The liquid disposal means 28 can be used e.g. for disposing container contents after use.

Preferably, during operation, the contents of the container 1 are agitated by injecting one or more agitation jets into the container 1 as well. Such an agitation jet can e.g. include the biopolymer solution and/or solvent as such. To that aim, recirculation of the contents of the container 1 can be applied, e.g. achieved by discharging some of the contents via the discharge port 9, to be pumped back into the container 1 by the fourth pumping unit P4. Since the discharge port 9 is located at a relatively low level (at or near the container bottom, i.e. significantly lower than a vertical position of a biopolymer solution feed port 8), discharged container content preferably contains the solvent and water without or substantially without precipitated biopolymer material.

The agitation step can e.g. be a separate step, i.e. separate from a container filling process and/or it can be at least partly overlap with a container filling step. It is preferred that the agitation step is applied such that the contents of the container (i.e. the mixture of biopolymer solution and solvent) are turbulently mixed.

In this way, biopolymer precipitate can be formed efficiently and safely, in a well controlled environment wherein use of mechanical stirrers can be avoided. Thus, also, relatively high throughputs can be achieved.

Although the illustrative embodiments of the present invention have been described in greater detail with reference to the accompanying drawings, it will be understood that the invention is not limited to those embodiments. Various changes or modifications may be effected by one skilled in the art without departing from the scope of the invention as defined in the claims.

It is to be understood that in the present application, the term "comprising" does not exclude other elements or steps. Also, each of the terms "a" and "an" does not exclude a plurality. Also, a single processor or other unit may fulfil functions of several means recited in the claims. Any reference sign(s) in the claims shall not be construed as limiting the scope of the claims.

For example, the system can include a cooling means for cooling the contents of the container 1, e.g. to a temperate at or below room temperature, in particular to further reduce explosion risks.

## Claims

1. Method for separating a precipitate from a liquid, including:
- inducing transport of at least part of the precipitate to an upper surface of the liquid; and
- removing precipitate from the upper surface of the liquid.

2. Method according to claim 1, wherein the liquid contains water.

3. Method according to claim 1 or 2, wherein the liquid contains an organic solvent, for example a solvent for inducing precipitate formation in the liquid.

4. Method according to any of the preceding claims, wherein the precipitate is a biopolymer, for example a fibrous biopolymer precipitate.

5. Method according to any of the preceding claims, wherein the precipitate has a density (kg/m³) that is substantially the same as a density (kg/m³) of the liquid.

6. Method according to any of the preceding claims, including feeding a fluid into the liquid, in particular for generating an upwardly directed precipitate transport flow in the liquid, the fluid preferably forming at least one stream of fluid bubbles in the liquid.

7. Method according to claim 6, wherein the fluid has a lower density than a density of the liquid.

8. Method according to claim 6 or 7, wherein the fluid is a gas or gas mixture, for example an inert gas.

9. Method according to any of the claims 6 to 8, wherein the fluid is injected into the liquid via a number of fluid injection openings, for example pores and/or injection nozzles, in particular at a level below the upper surface of the liquid.

10. Method according to any of claims 6 to 9, wherein the fluid is injected into the liquid to form upwardly moving gas bubbles, which mix the contents of the liquid.

11. Method according to any of the preceding claims, including at least a liquid agitation step of injecting at least one fluid jet into the liquid for agitating the liquid, in particular for turbulently mixing the contents of the liquid.

12. Method according to any of the preceding claims, including:
- providing a liquid solution of a compound, e.g. a biopolymer, to be precipitated;
- mixing the liquid solution with a precipitation inducer to induce precipitation of the compound into the precipitate, wherein the resulting mixture is used as the liquid from which precipitate is to be separated.

13. Method according to any of the preceding claims, including dehumidification of precipitate that is separated from the liquid.

14. System for separating a precipitate from a liquid, for example for carrying out a method according to any of the preceding claims, wherein the system includes:
- a container (1; 101) for receiving a liquid wherein precipitate is and/or has been formed;
- a precipitate transport inducing means (3; 103a) for inducing precipitate transport towards an upper surface of liquid, held in the container (1; 101) during operation; and
- a precipitate removing means (5; 105) for removing precipitate from a precipitate removal level within the container (1; 101), the precipitate removal level being associated with an upper surface of liquid, held in the container (1; 101) during operation.

15. System according to claim 14, wherein the precipitate transport inducing means (3) include at least one fluid inlet (3a; 103a), configured for feeding precipitate transport fluid into the container at or near a bottom of the container, in particular a fluid having a lower density than a density of liquid present in the container during operation.

16. System according to claim 15, wherein the precipitate transport inducing means (3) include a plurality of fluid injection openings.

17. System according to any of claims 14 to 16, including a fluid outlet (3b; 103b) for removing precipitate transport fluid from the container (1), the fluid outlet preferably being located above or near the precipitate removal level.

18. System according to any of claims 14 to 17, wherein the precipitate transport inducing means (3) include a gas source, containing precipitate transport gas, for example an inert gas.

19. System according to any of claims 14 to18, wherein the precipitate removing means (5; 105) include a driven conveyer, arranged for contacting precipitate at the upper surface of the liquid, during operation, to move precipitate away from the liquid to a precipitate collector (7).

20. System according to any of claims 14 to 19, including at least one pump (P4) and liquid injection nozzle, configured for injecting a liquid into the container, in particular for agitating liquid contents of the container during operation.

21. System according to claim 20, wherein the container (1) includes a liquid discharge port (9; 109), for example located at or near a bottom of the container, wherein the liquid discharge port is in fluid communication with the pump (P4) for feeding liquid to the pump.

22. Process for the recovery of water soluble biopolymers from an aqueous solution, the process including a method according to any of claims 1 to 13 and/or use of a system according to any of claims 14 to 21 for separating at least part of the biopolymers from the solution.
